# EUROPEAN PATENT APPLICATION

(11) **EP 0 573 161 A1**
(43) Date of publication of application: **08.12.1993**
(21) Application number: 93303749.1
(22) Date of filing: 14.05.1993
(51) Int. Cl.: A47J 41/02, B65D 51/28

(54) **A container assembly**

(30) Priority: 05.06.1992 GB 9211951
(71) Applicant: THERMOS LIMITED, Brentwood, Essex CM15 9AY (GB)
(72) Inventor: Dane, Brian, c/o Thermos Limited, Brentwood, Essex CM15 9AY (GB)
(74) Representative: Walters, Frederick James

(57) **Abstract**

A container assembly has a container 1 with a primary storage cavity formed by a double walled vacuum insulated vessel 3. The open top of the vessel 3 is closed by a one piece plastics moulded stopper 2 which threadedly engages with the container. The stopper has a hollow bung part 17 forming a small secondary storage cavity 19 an open top for which is closable by a lid 18 attached to the bung part by an integral hinge 21. The lid 18 and bung part 17 have flanges 33 and 31 which snap engage to retain the lid closed. The cavity 19 is conveniently used for storage of ingredients for addition to the contents of the vessel 3.

## Description

### TECHNICAL FIELD & BACKGROUND ART

The present invention relates to a container assembly and particularly concerns such assemblies of the kind in which a container is provided with an open top that provides access to a storage cavity and which open top is closable by a stopper that screw threadedly engages the container so that a bung part of the stopper seals the open top. An example of such an assembly is an insulated flask commonly used for leisure ware.

With container assemblies of the kind specified, especially insulated leisure ware flasks, it has hitherto been proposed to provide a secondary storage cavity for accommodating ingredients which may be selectively added to the contents of a main storage cavity in the container. Typically with insulated flasks, such as well known double walled vacuum insulated flasks, the main storage cavity in the flask may contain, for example, hot tea, coffee or plain water while the secondary storage cavity may contain optional ingredients such as sugar or sweeteners for addition to the tea or coffee, or coffee or tea for addition to the hot water as required. In a prior proposal for vacuum insulated flasks the secondary chamber has been formed by a small bottle or similar component having an openable top and which is housed within a removable base of the container - usually the base is screw threaded to the container to facilitate its removal and permit access to the bottle and contents thereof. This prior structure, whilst convenient for accommodating optional ingredients as aforementioned, is a relatively expensive structure both from manufacture and material costs and requires relatively inconvenient assembly techniques. It is an object of the present invention to provide a container assembly having primary and secondary storage cavities but which alleviates the disadvantages of the prior proposals.

### STATEMENT OF INVENTION & ADVANTAGES

According to the present invention there is provided a container assembly comprising a container having a primary storage cavity with an open top; a stopper screw threadedly engageable with the container, the stopper having a bung part which closes the open top of the primary storage cavity; said bung part having a secondary storage cavity with an open top and said stopper including a lid hingedly mounted on the bung part for closing the open top of the secondary storage cavity.

By the present invention it is envisaged that the stopper of the container assembly will, predominantly, have a hollow structure with its bung part providing a relatively small cavity for accommodation, for example, of ingredients which may be optionally added to the contents of a relatively larger primary storage cavity within the container. The open top of the bung part is closable by a lid and it is envisaged that this lid will be readily openable to provide simple and convenient access to the contents of the secondary storage chamber when required (possibly whilst the stopper is fitted to or removed from the container).

Preferably the bung part and lid of the stopper are formed as a one piece moulding in plastics to provide an integral plastics hinge between the bung part and lid. Desirably the lid snap engages with the bung part to provide a firm closure. If required a peripheral seal may be provided between the bung part and lid when closed.

The bung part of the stopper may be provided with an external male thread which engages with an internal female thread on the container; alternatively the stopper may be provided with a skirt having an internal female thread which engages with an external male thread on the container.

Whilst the present invention is applicable to container assemblies generally, it was primarily developed for assemblies in which the primary storage cavity is thermally insulated, for example where the primary storage cavity is formed by a double walled vacuum insulated vessel.

### DRAWINGS

One embodiment of a container assembly constructed in accordance with the present invention will now be described, by way of example only, with reference to the accompanying illustrative drawings in which:-
Figure 1 is an axial section through the assembly showing the stopper fitted to close the open top of the container and with the lid of the stopper closing the open top of its bung part;
Figure 2 is a side elevation of the stopper with its lid open;
Figure 3 is a plan view of the stopper as shown in Figure 2, and
Figure 4 is a section of the stopper taken on the line A - A of Figure 3.

### DETAILED DESCRIPTION OF DRAWINGS

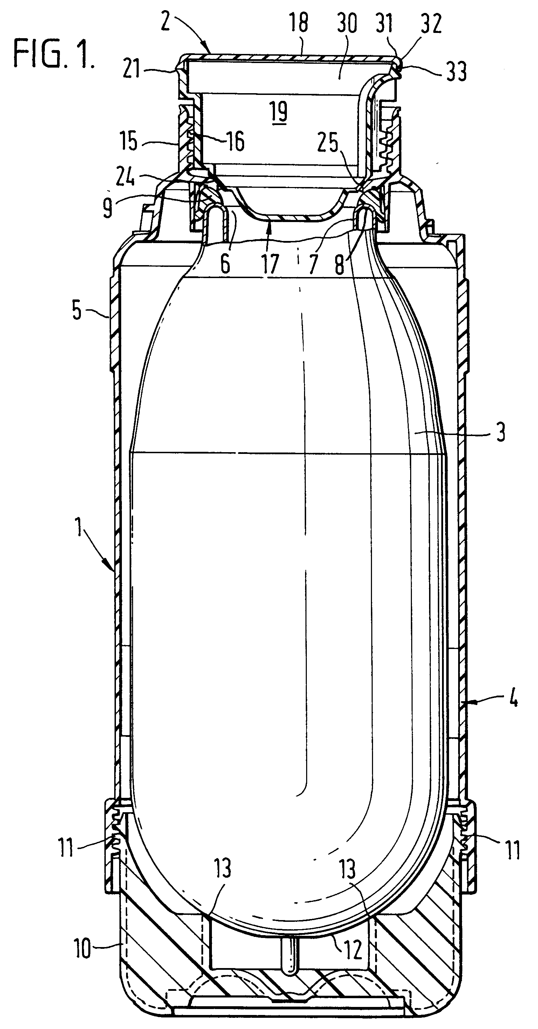

The container assembly shown in Figure 1 has a container 1 and a stopper 2 and is in the form of a flask for leisure ware. The major part of the flask assembly will be readily apparent to those skilled in the art and, for convenience of discussion, may be regarded as conventional comprising a glass double walled vacuum insulated vessel or filler 3 retained within a generally cylindrical housing 4. The major part of the vessel 3 is accommodated within a plastics moulded upper housing part 5 which forms a circular open top 6 to the housing 4. The top opening 6 communicates with a mouth 7 of the vessel 3 through which contents of a relatively large primary cavity formed by the vessel may be poured. The mouth 7 is formed by an annular rim 8 of the filler 3 that engages with a sealing ring 9 fitted in a seal seating moulded integrally with the housing part 5.

The housing 4 has a cup shaped plastics moulded base part 10 which is partly received within the lowermost open end of the housing part 5 to close the bottom of that housing part and to retain the filler 3 within the housing 4. The base part 10 has an external screw thread 11 which engages with a complementary internal screw thread 11 in the housing part 5 so that when the housing parts 5 and 10 are threadedly engaged, the base part 10 abuts the bottom 12 of the filler 3 (as indicated at 13) to bias the filler rim 8 into firm sealing engagement with the ring seal 9.

Moulded integrally with the housing part 5 is an upstanding annular tubular neck 15 that is concentric with the top opening 6 and rim 8 and is provided with an internal screw thread 16.

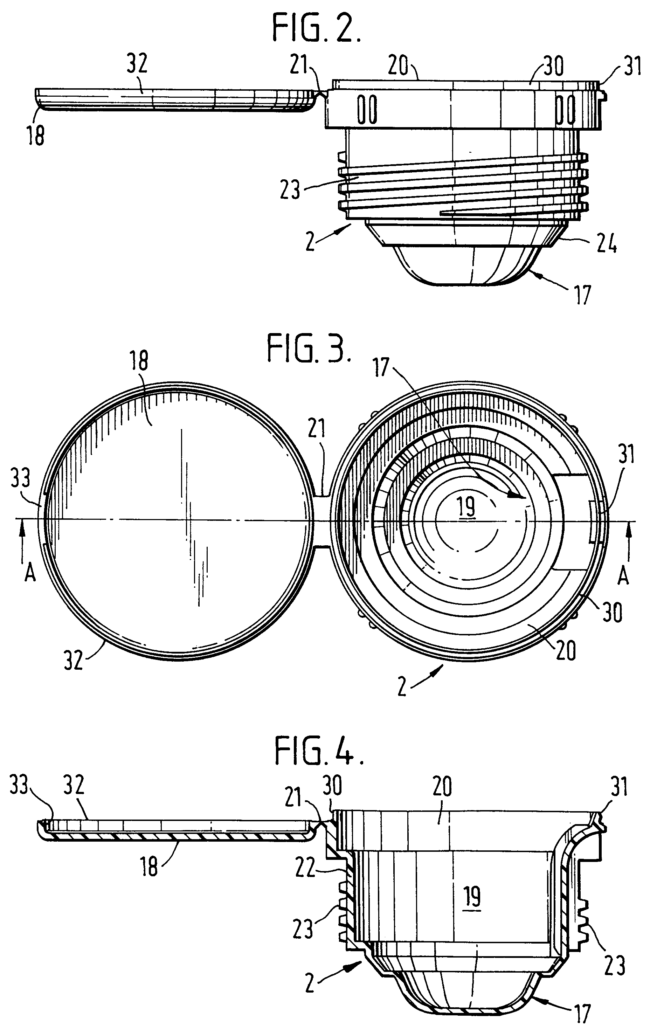

The stopper 2 is formed as a one piece moulding in plastics (of which polypropylene is preferred) to comprise a cup shaped bung part 17 and a lid 18. The bung part 17 forms a secondary, relatively small storage cavity 19 with an open top 20 which is closable by the lid 18. An integral plastics hinge 21 is provided between the lid 18 and bung part 17 and, as will be seen from Figure 3, both the lid and bung part are of circular profile. The bung part 17 has a cylindrical wall 22 on which is formed an external male screw thread 23 that is complementary to the female screw thread 16 in the container neck 15. The stopper 2 screw threadedly engages with the neck 15 so that an annular shoulder 24 of the bung part can abut an annular shoulder or flange 25 on the housing part 5 for the bung part to close the open top 6 and provide an annular seal between the stopper and the housing part by abutment of the faces 24 and 25.

Upstanding on the bung part 17 of the stopper adjacent its open top 20 is an annular flange or rim 30 having a radially outwardly directed part annular flange 31 positioned diametrically opposite to the hinge 21. The lid 18 includes a peripheral annular skirt 32 having a radially inwardly directed part annular flange 33 located diametrically opposite to the hinge 21. On closure of the lid 18 the rim or flange 30 is closely received, possibly in sealing engagement, within the lid skirt 32 as the flanges 31 and 33 (which are complementary to each other on the lid and bung part) snap engage to retain the lid closed over the top opening of the bung part. The snap engaging flanges 31 and 33 are relatively small and profiled, possibly with a barb shape, so that the lid is easily closed and opened on the bung part by finger pressure as the plastics material yields.

The secondary cavity 19 provides for convenient and readily accessible storage of ingredients which may be optionally added to the contents of the large cavity in the vessel 3 (for example the cavity 19 may contain tea bags and sugar for adding to hot water in the vacuum insulated filler).

Although not particularly illustrated in the drawings, the plastics moulded bung part of the stopper may have its male threads 23 interrupted by an axially extending channel or recess on the exterior of that part above its shoulder 24 in Figure 2. By this optional feature when the stopper is partially unscrewed from the container to provide clearance between the bung part shoulder 24 and the shoulder 25 on the container, the contents of the vessel 3 may be poured from the container assembly by way of the aforementioned axially extending channel or recess. Also, and again not illustrated, the flask assembly shown in Figure 1 will usually be provided with a cup which is inverted to cover the stopper 2 and collar 15 and screw threadedly or otherwise engage to be retained on the housing part 5.

## Claims

1. A container assembly comprising a container having a primary storage cavity with an open top; a stopper screw threadedly engageable with the container, the stopper having a bung part which closes the open top of the primary storage cavity; said bung part having a secondary storage cavity with an open top and said stopper including a lid hingedly mounted on the bung part for closing the open top of the secondary storage cavity.

2. An assembly as claimed in claim 1 in which the bung part and lid of the stopper are formed as a one piece moulding in plastics to provide an integral plastics hinge between the bung part and lid.

3. An assembly as claimed in either claim 1 or claim 2 in which the lid snap engages with the bung part.

4. An assembly as claimed in any one of the preceding claims in which a peripheral seal is provided between the bung part and lid when closed.

5. An assembly as claimed in any one of the preceding claims in which the bung part has an upstanding peripheral rim adjacent to its open top and the lid has a peripheral skirt within which the peripheral rim is received when the lid is closed.

6. An assembly as claimed in claim 5 when appendant to claim 3 in which the peripheral rim has an external flange which snap engages as the lid is closed with a substantially complementary internal flange on the skirt of the lid.

7. An assembly as claimed in any one of the preceding claims in which the bung part of the stopper has an external male thread which engages with an internal female thread on the container.

8. An assembly as claimed in any one of the preceding claims in which the primary storage cavity is provided by a double walled vacuum insulated vessel.
